# EUROPEAN PATENT APPLICATION

(11) **EP 4 477 057 A1**
(43) Date of publication of application: **18.12.2024**
(21) Application number: 24179229.0
(22) Date of filing: 31.05.2024
(51) Int. Cl.: A01G 3/06, A01D 34/84, A01D 34/90, A01G 20/47

(54) **DEVICE FOR PERFORMING MAINTENANCE OPERATIONS ON A TERRAIN OR A GARDEN**

(30) Priority: 15.06.2023 IT 202300012306
(71) Applicant: Stiga S.p.A., 31033 Castelfranco Veneto (TV) (IT)
(72) Inventor: RIGONI, Mattia, 31015 Conegliano (TV) (IT); CAMERON, James, 31030 Casier (TV) (IT); TOLOTTO, Daniele, 31040 Chiarano (TV) (IT); MARTONE, Dario, 35138 Padova (PD) (IT); D'AGOSTINI, Mauro, 35018 San Martino di Lupari (PD) (IT); ZANOLIN, Alessandro, 35010 Trebaseleghe (PD) (IT); ZONTA, Paolo, 31033 Castelfranco Veneto (TV) (IT)
(74) Representative: PGA S.p.A.

(57) **Abstract**

A device for performing maintenance operations on a terrain or a garden comprises a gripping handle (9) provided with a drive mechanism (10) operatively coupled to an actuator (5) for controlling it and moving a tool (4) of the device (1). The drive mechanism (10) comprises a consensus element (17), a control element (18) and a stop element (19), each comprising an operating portion (17A, 18A, 19A) extending outside the gripping handle (9), for interacting with the operator's hand, and a respective operating portion (17B, 18B, 19B). The stop element (19) is configured to assume: a locked position, in which the operating portion (19B) of the stop element (19) engages the operating portion (17B) of the consensus element (17) and/or the operating portion (18B) of the control element (18) so as to prevent movements of the control element (18); a release position, in which a mobility of the consensus element (17) and the control element (18) is allowed by acting on the respective operating portions (17A, 18A). The consensus element (17) is movable between a first position and a second position. In the first position, the operating portion (17B) of the consensus element (17) engages the operating portion (18B) of the control element (18) and prevents the movement thereof, in the second position, the operating portion (17B) of the consensus element (17) maintains the stop element (19) in the respective release position.

## Description

### Field of the invention

The present invention relates to a device for performing maintenance operations on terrain or gardens, in particular the present invention relates to a drive mechanism and an activation mode of the device by an operator who usually grasps and handles the device and activates it when necessary.

### State of the art

Devices adapted to perform maintenance operations, e.g., mowing grass and/or pruning plants, shrubs and hedges, and/or removing foliage and cuttings, are known in the field of gardening and terrain maintenance. The devices in question can be brush cutters, hedge trimmers, blowers or aspirators or even hydro-cleaners.

Such devices commonly comprise a body or frame carrying equipment or a tool moved by means of an actuator or a motor, for example electric. The main body has a handle which carries control elements (such as levers and/or buttons) operatively connected to the actuator or motor (for example by means of an electronic control unit) powered by the mains or a battery. Such control elements allow the operator to turn on the device and drive the actuator or motor if necessary, i.e., when the equipment or tool must be driven to perform the maintenance operations indicated above, also possibly adjusting the power thereof.

Devices provided with a power button are known, which has the function of turning on the device, and two buttons or control levers which must both be driven to activate the actuator or motor and then move the equipment or tool. The two buttons or the two levers, usually called the control element and consensus element, have the function of preventing an involuntary and potentially dangerous driving of the device. For example, the control element does not activate the actuator or motor if the operator does not also act on the consensus element

However, the Applicant has observed that the devices of known type provided with the double drive do not sufficiently ensure safety. In fact, it is possible that the operator, grasping the handle to pick up the device or while moving to a different place while holding it, simultaneously and inadvertently presses both the consensus and the control element and drives the equipment or tool.

Devices are also known in which the aforementioned control element and consensus element are placed in such positions as to make it more difficult for them to be touched at the same time but also more uncomfortable to drive when needed.

### Objects of the invention

Therefore, the object of the present invention is to solve at least one of the drawbacks and/or limitations of the known devices.

A first objective is to provide a device for performing maintenance operations on terrain or gardens which is safe for the operator during use but also when it must be handled and moved.

A further objective is to provide a device for performing maintenance on terrain or gardens capable of making the maintenance operations easier for the operator.

A further objective is to provide a device for performing maintenance operations on terrain or gardens which is convenient to carry and use.

A further objective is to provide a device for performing maintenance operations on terrain or gardens which is reliable and robust.

These and other objects, which will appear more clearly from the following disclosure, are substantially achieved by a device for performing maintenance operations on terrain or gardens and by a method of use thereof in accordance with one or more of the appended claims and/or the following aspects.

### Summary

Aspects of the present invention are listed here below.

A 1st aspect relates to a device for performing maintenance operations on a terrain or a garden, said device comprising:
a main body provided with a work head and a gripping handle configured to be grasped by an operator's hand;
a tool mounted on or in the main body;
an actuator mounted on or in the main body and connected to the tool;
the gripping handle comprising a drive mechanism operatively coupled to the actuator for controlling said actuator and moving the tool;
in which the drive mechanism comprises a consensus element, a control element and a stop element, each of said consensus element, control element and stop element comprising an operating portion extending at least partially outside the gripping handle, to interact with the operator's hand, and a respective operating portion;
the stop element being configured to assume:
   ▪ a locked position, in which the operating portion of said stop element engages the operating portion of the consensus element and/or the operating portion of the control element so as to prevent movements of at least the control element;
   ▪ a release position, in which a mobility of the consensus element and of the control element is allowed by acting on the respective operating portions so as to control the actuator;
in which a switching between the locked position and the release position is obtained by acting on the operating portion of the stop element;
in which the consensus element is movable between a first position and a second position, in which:
   ▪ in the first position, the operating portion of the consensus element engaging the operating portion of the control element and preventing the movement thereof;
      and/or
   ▪ in the second position, the operating portion of the consensus element maintaining the stop element in the respective release position.

In a 2nd aspect according to the preceding aspect, the locked position of the stop element corresponds to a configuration of prohibiting the device from using the tool and the release position of the stop element corresponds to a configuration of enabling the device to use said tool.

In a 3rd aspect according to aspect 1 or 2, in the locked position the operating portion of the stop element engages both the operating portion of the consensus element and the operating portion of the control element so as to prevent movements of both the consensus element and the control element, or any drive by the operator of said drive mechanism is prohibited.

In a 4th aspect according to any one of the preceding aspects, the operating portion of each of said consensus element, control element and stop element is placed inside the gripping handle.

In a 5th aspect according to any one of the preceding aspects, the gripping handle has a box-like shape configured to contain at least the operating portion of each of said consensus element, control element and stop element.

In a 6th aspect according to any one of the preceding aspects, the stop element placed in the locked position prevents movements of the consensus element placed in the respective first position.

In a 7th aspect according to any one of the preceding aspects, when the stop element is in the release position, the consensus element can be moved between the first position and the second position by acting on the operating portion of said consensus element.

In an 8th aspect according to any one of the preceding aspects, the drive mechanism comprises an elastic element, optionally a coil spring or a piston, coupled to the consensus element and configured to move the consensus element towards the first position or to retain the consensus element in the first position.

In a 9th aspect according to the preceding aspect, a force of the elastic element counteracts an action exerted on the operating portion of the consensus element and adapted to move or retain the consensus element in the second position.

In a 10th aspect according to the preceding aspect, the force of the elastic element pushes the operating portion of the consensus element towards the outside of the gripping handle.

In an 11th aspect according to the preceding aspect, the consensus element comprises a stroke end configured to stop a movement of the consensus element caused by the force of the elastic element.

In a 12th aspect according to any one of the preceding aspects, the operating portion of the stop element has a seat and the operating portion of the consensus element has a projection.

In a 13th aspect according to the preceding aspect, in the second position, the projection of the operating portion of the consensus element is housed in the seat of the operating portion of the stop element.

In a 14th aspect according to aspect 12 or 13, the projection is defined by a peg, optionally of cubic or cylindrical shape, or by a step or by a hook.

In a 15th aspect according to any one of the preceding aspects, when the consensus element is in the first position, the respective operating portion protrudes from the gripping handle more than when the consensus element is in the second position.

In a 16th aspect according to any one of the preceding aspects, the operating portion of the stop element protrudes cantilevered from the gripping handle.

In a 17th aspect according to the preceding aspect, in the locked position and in the release position, the operating portion of the stop element is inclined at different angles to each other with respect to the gripping handle.

In an 18th aspect according to any one of the preceding aspects, the drive mechanism comprises a spring coupled to the stop element and configured to move the stop element towards the locked position or to retain the stop element in the locked position.

In a 19th aspect according to the preceding aspect, a force of the spring counteracts an action exerted on the operating portion of the stop element and adapted to move or retain the stop element in the release position. In a 20th aspect according to aspect 18 or 19, the spring is a torsional spring arranged around a pin housed in a cavity of the stop element and constrained to said stop element and to a wall of the gripping handle.

In a 21st aspect according to the preceding aspect, said cavity being placed between said operating portion and said operating portion of the stop element, the pin defining a rotation fulcrum of said stop element.

In a 22nd aspect according to any one of the preceding aspects, the stop element is a monolithic piece, optionally made of plastic or metal material.

In a 23rd aspect according to any one of the preceding aspects, the control element is movable between a rest position and at least one actuation position.

In a 24th aspect according to the preceding aspect, when the stop element is in the locked position, the operating portion of said stop element maintains the control element in the rest position.

In a 25th aspect according to aspect 23 or 24, when the stop element is in the release position and, optionally, the consensus element is in the second position, the control element can be moved into said at least one actuation position by acting on the operating portion of said control element.

In a 26th aspect according to aspect 23 or 24 or 25, in said at least one actuation position, the operating portion of the control element is operatively coupled to the actuator so as to control it.

In a 27th aspect according to any one of aspects 23 to 26, the operating portion of the consensus element, optionally an abutment portion of the operating portion of the consensus element, is engageable with the operating portion of the control element, when the consensus element is in the first position, to lock the control element in the rest position.

In a 28th aspect according to the preceding aspect, when the consensus element is in the second position, the operating portion of the consensus element, optionally the abutment portion of the operating portion of the consensus element, is disengaged from the operating portion of the control element to allow the control element to move.

In a 29th aspect according to any one of aspects 23 to 28, a sensor element, optionally a switch or a potentiometer, is electrically connected to the actuator.

In a 30th aspect according to the preceding aspect, the sensor element is housed in the gripping handle and has a sensitive element, e.g., a rod, optionally translatable, engaged or engageable with the operating portion of the control element.

In a 31st aspect according to the preceding aspect, the sensitive element is coupled to an elastically yieldable body of the sensor element configured to move the control element towards the rest position or to retain the control element in the rest position.

In a 32nd aspect according to the preceding aspect, a force of the elastically yielding body counteracts an action exerted on the operating portion of the control element and adapted to move or retain the control element in said at least one actuation position.

In a 33rd aspect according to any one of aspects 30 to 32, a movement of the sensitive element generates or adjusts a control signal of the tool, said control signal directly or indirectly piloting the tool; optionally said control signal defining a speed and/or a position of the tool.

In a 34th aspect according to the preceding aspect, the control signal is proportional to the movement of the sensitive element or is on-off; optionally the control signal is binary and/or continuous and/or discrete.

In a 35th aspect according to aspect 32, 33 or 34, an electronic or electromechanical control unit, optionally a control board, is connected to the sensor element and the actuator.

In a 36th aspect according to the preceding aspect, the electronic or electromechanical control unit is installed in the gripping handle.

In a 37th aspect according to the preceding aspect, the control signal is generated or regulated by the electronic or electromechanical control unit or by means of the electronic or electromechanical control unit.

In a 38th aspect according to any one of aspects 23 to 37, when the control element is in the rest position, the respective operating portion protrudes from the gripping handle more than when the control element is in said at least one actuation position.

In a 39th aspect according to any one of the preceding aspects, the consensus element is movable in rotation about a first rotation axis.

In a 40th aspect according to the preceding aspect, the control element is movable in rotation about a second rotation axis parallel to the first rotation axis.

In a 41st aspect according to the preceding aspect, the stop element is movable in rotation about a third rotation axis perpendicular to the first rotation axis and the second rotation axis.

In a 42nd aspect according to the preceding aspect, the operating portion of the control element is movable in rotation about the second rotation axis.

In a 43rd aspect according to the preceding aspect, the operating portion of the control element is connected to the operating portion of said control element so as to translate along a direction parallel to the third rotation axis when the operating portion of the control element rotates about the second rotation axis.

In a 44th aspect according to the preceding aspect, the operating portion of the control element has at least one slot which houses a peg integral with the operating portion of the control element.

In a 45th aspect according to the preceding aspect, the operating portion of the control element is translatable in a guide obtained in the gripping handle, whereby the rotation of the operating portion of the control element about the second rotation axis causes a rotation of the pin in the slot and the rototranslation of the operating portion of the control element along the guide.

In a 46th aspect according to any one of the preceding aspects, the control element is at least partially hollow and is configured.

In a 47th aspect according to the preceding aspect, the operating portion of the control element is hollow.

In a 48th aspect according to any one of the preceding aspects, the operating portion of the consensus element is located on a first wall of the gripping handle, the operating portion of the control element is located on a second wall of the gripping handle opposite the first wall, the operating portion of the stop element is located on a third wall of the gripping handle placed between the first wall and the second wall, so that, by grasping the gripping handle with the hand, the palm rests against the operating portion of the consensus element, the thumb can be positioned against the operating portion of the stop element and the remaining fingers rest against the operating portion of the control element.

In a 49th aspect according to the preceding aspect, the operating portion of the consensus element protrudes externally from an opening obtained in the first wall, the operating portion of the control element protrudes externally from an opening obtained in the second wall, the operating portion of the stop element protrudes externally from an opening obtained in the third wall.

In a 50th aspect according to any one of the preceding aspects, an on/off switch of the device is placed on the first wall of the gripping handle and near the operating portion of the stop element, so as to be reachable by the thumb of the operator grasping said gripping handle.

In a 51st aspect according to any one of the preceding aspects, the device is a device for cutting grass, hedges or trees or a blower or an aspirator or a hydro-cleaner.

In a 52nd aspect according to any one of the preceding aspects, the tool mounted on or in the main body is a fan of a blower or an aspirator, a valve of a hydro-cleaner or is a blade, a wire, a knife, a rake, a hoe, a scissor. In a 53rd aspect according to any one of the preceding aspects, the actuator is an electric motor and the device comprises a battery configured to power the actuator or a power supply connectable to the mains.

In a 54th aspect according to the preceding aspect, the battery is rechargeable, optionally removable from the device, optionally a lithium-ion battery.

A 55th aspect relates to a method for driving a device according to one or more of the preceding aspects, the method comprising:
enabling the device by acting on the operating portion of the stop element so as to move the operating portion of said stop element from the locked position to the release position;
acting on the operating portion of the consensus element so as to move the consensus element from the first position into the second position and stop the stop element in the respective release position;
controlling the tool by acting on the operating portion of the control element.

In a 56th aspect according to the preceding aspect, by acting on the operating portion of the consensus element, the release of the operating portion of the control element by the consensus element is further determined.

In a 57th aspect according to aspect 55 or 56, by maintaining the consensus device in the second position by means of a continuous action exerted on the respective operating portion, the stop element remains in the release position, even releasing the operating portion of said stop element.

In a 58th aspect according to any one of aspects 55 to 57, the method comprises:
releasing the operating portion of the consensus element and possibly the operating portion of the stop element so that the operating portion of the consensus element returns to the first position and the operating portion of the stop element moves toward the locked position;
releasing the operating portion of the control element so that the operating portion of said control element returns to the rest position and the operating portion of the stop element returns to the locked position.

### Brief description of the drawings

Some embodiments and aspects of the invention will be described hereinafter with reference to the accompanying drawing tables, given merely for indicative/exemplary/explanatory non-limiting purposes, in which:
figure 1 illustrates a device for performing maintenance operations on terrain or gardens according to the present invention;
figure 2 is an enlarged portion of the device of figure 1;
figure 3 is an exploded view of the portion of figure 2;
figure 4 is a 3D view of an assembly of elements of the portion of figures 2 and 3;
figures 5A - 5D illustrate the assembly of figure 4 in respective operating positions;
figures 6A - 6D illustrate a section of the portion of figures 2 and 3 in the operating positions of figures 5A - 5D;
figures 7A - 7D illustrate a different section of the portion of figures 2 and 3 in the operating positions of figures 5A - 5D.

### Detailed description

The reference number 1 globally indicates a device for performing maintenance operations on a terrain or a garden. In the illustrated non-limiting example, such a device 1 is a device for cutting grass, in particular a brush cutter. In variants not illustrated in the attached drawings, the device can be of different type, for example a device for cutting trees or hedges or a blower or an aspirator or a hydro-cleaner.

The device 1 comprises a main body 2 defined by a rod carrying at a distal end thereof a work head 3 comprising an external rotor carrying one or more blades or wires, not illustrated. The rotor with the blades or wires define the tool 4 of the device 1. The work head 3 also carries an actuator 5, in particular an electric motor, connected to the rotor to cause the rotation thereof. Other elements of the work head 3 can be known per se and have not been disclosed herein.

If the device is of a different type, the tool can for example be a fan of a blower or an aspirator, a valve of a hydro-cleaner or a knife, a rake, a hoe, a scissor.

The main body 2 is further provided with a housing 6 for a battery and a power supply, not illustrated, connected to the electric motor by means of cables which are not visible, and a transverse bar 7 spaced from the work head 3 and carrying a pair of gripping handles 8, 9 configured to be grasped by the hands of an operator. The battery can be of the removable and rechargeable type, for example lithium-ion. In embodiment variants, the power supply can be connected to the mains or the motor can be a combustion engine.

In use, the transverse bar is placed at the operator's back and the rod arranged on the right flank while the operator grasps the two gripping handles 8, 9 with his/her hands. In the illustrated example, the device 1 is configured for a right-handed operator, whereby the transverse bar 7 protrudes more to the left than to the right of the rod and the gripping handle 9 on the right comprises a drive mechanism 10 while the gripping handle 8 on the left lacks mechanisms.

Hereinafter, reference will be made in the present description only to the gripping handle 9 on the right, referring to it simply as the gripping handle 9.

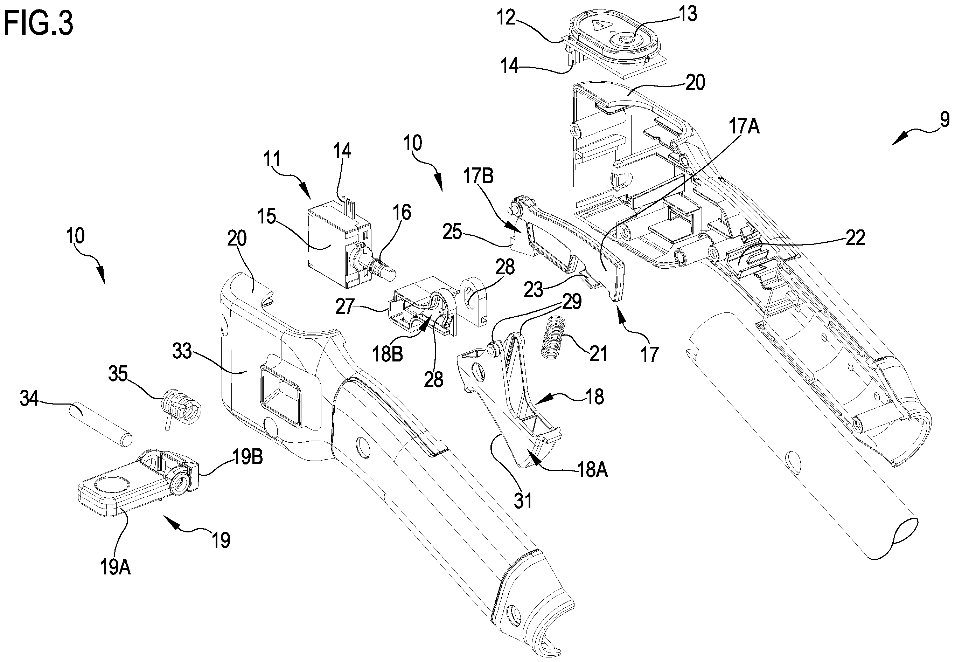

The drive mechanism 10 of the gripping handle 9 is operatively coupled to the electric motor, by means of mechanical, electrical and electronic elements described below, to control it and move the rotor and the blades. As visible in the exploded view of figure 3, the gripping handle 9 has a hollow box-like shape formed by two halves, for example of plastic material, and houses the aforementioned drive mechanism 10, a sensor element 11, in particular a potentiometer, an electronic or electromechanical control unit 12, in particular an electronic control board, an on-off switch 13 of the device 1 mounted on the electronic control board.

The potentiometer is connected to the electronic control board by means of a series of contacts 14. The electronic control board is electrically connected, by means of wiring not illustrated, to the power supply and therefore also to the electric motor of the device 1.

The potentiometer illustrated is a linear potentiometer provided with a box-like body 15 and a sensitive element 16 defined by a rod which protrudes from the box-like body 15 and is movable in translation between an extracted position and a retracted position. In the extracted position, a terminal end of the rod lies at a greater distance from the box-like body 15 than in the retracted position. The internal components and the operation of the potentiometer are not illustrated here, as they can be of a known type. We will only say that the rod is coupled to an elastically yieldable element of the potentiometer which, in the absence of stresses outside the potentiometer, pushes and keeps the rod in the extracted position.

The box 15 of the potentiometer is fixedly mounted inside the gripping handle 9 in a respective housing and the potentiometer rod can translate between the extended position and the retracted position, with respect to walls of the gripping handle 9 and along a translation direction D coinciding with a central axis of the rod.

The drive mechanism 10 comprises a consensus element 17, a control element 18 and a stop element 19 mounted in the gripping handle 9. Each of such elements 17, 18, 19 can be made, for example, of plastic or metal.

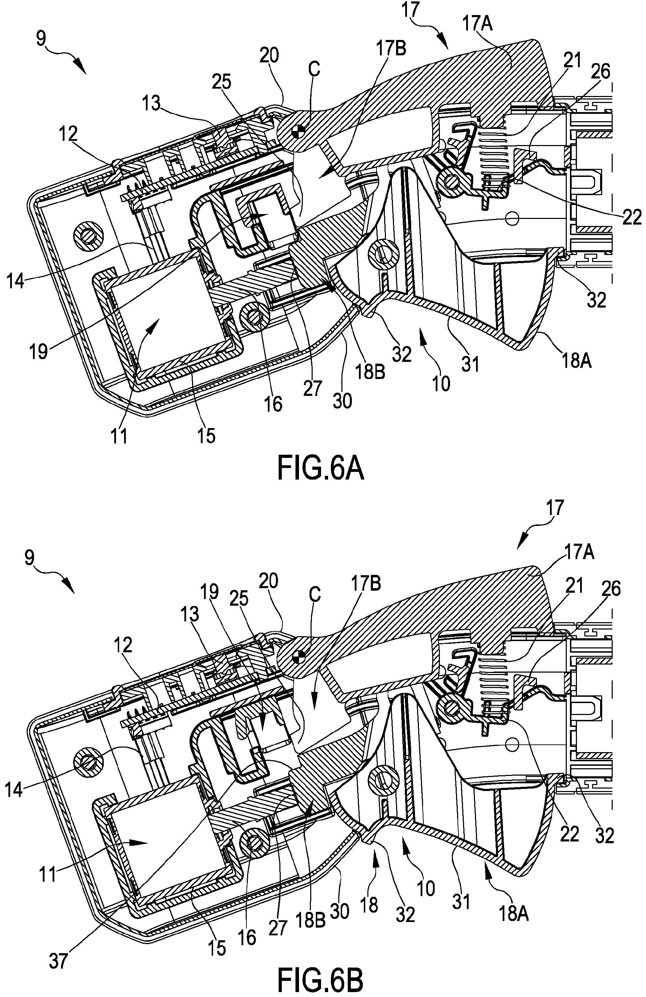

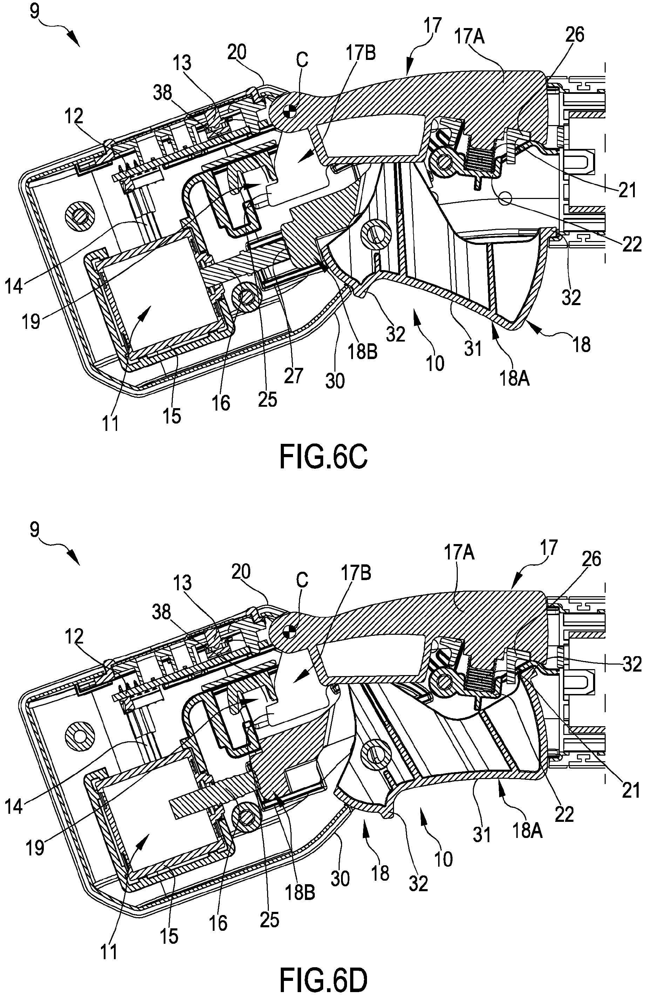

The consensus element 17 is a lever hinged to the gripping handle 9 around a fulcrum, so as to oscillate about a first rotation axis C. The fulcrum and the first rotation axis C are located at a first wall 20 of the gripping handle 9 on which the on-off switch 13 is mounted and where the electronic control board is located (figures 6A - 6D). The first rotation axis C is perpendicular to the translation direction D of the potentiometer rod.

The consensus element 17 comprises an operating portion 17A and an operating portion 17B which are mutually integral, i.e., which can rotate together about the first rotation axis C. The operating portion 17A has a flattened shape which extends mainly in a plane orthogonal to the first rotation axis C. The fulcrum and the first rotation axis C are placed at a first end of the operating portion 17A. The operating portion 17B extends from such a first end of the operating portion 17A.

An elastic element 21, in the example a coil spring, is coupled to the operating portion 17A in a spaced position from the first rotation axis C. A first end of the coil spring is engaged with the operating portion 17A and a second end of the coil spring is engaged in a housing 22 obtained inside the gripping handle 9. The elastic element 21 can also be a pneumatic piston.

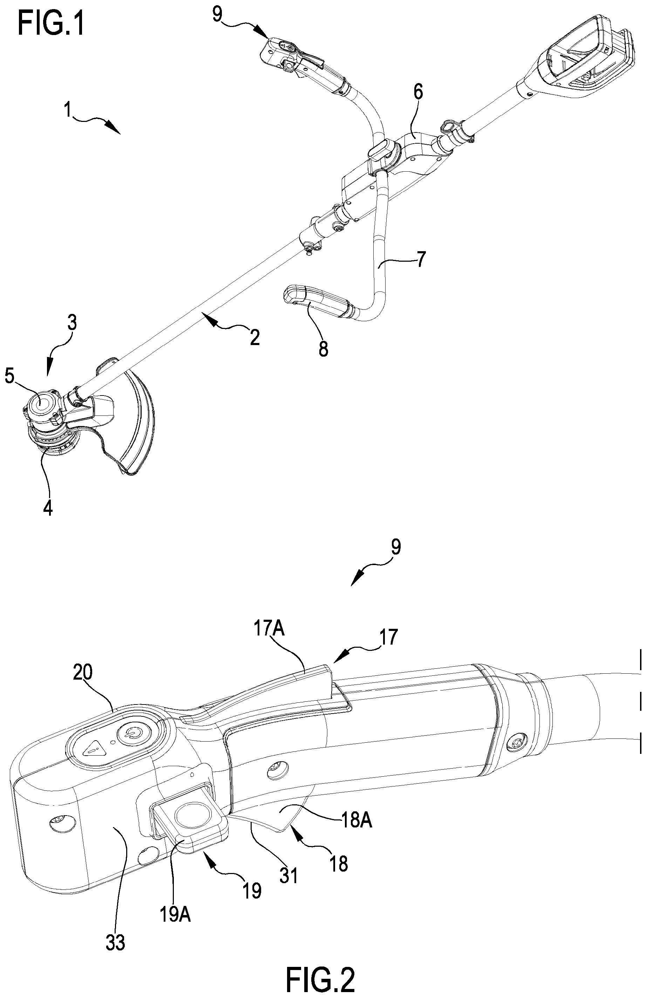

The operating portion 17A of the consensus element 17 protrudes externally from an opening obtained in the first wall 20 (figures 2, 6A- 6D). The coil spring pushes the operating portion 17A of the consensus element 17 outwards, and a stroke end 23, shaped on the operating portion 17A of the consensus element 17 and at the first end of the coil spring, prevents the operating portion 17A from exiting from the aforementioned opening. The operating portion 17B of the consensus element 17 extends from the fulcrum towards the inside of the gripping handle 9 and a peripheral portion 24 thereof has a thickness, measured parallel to the first rotation axis C, greater than a thickness of the operating portion 17A. The operating portion 17B further has a projection 25 protruding from the peripheral portion 24 in an opposite direction with respect to the operating portion 17A. The projection 25 is shaped according to needs, for example it is substantially cubic or cylindrical in shape or is defined by a step or by a hook.

In the absence of external stresses, the coil spring and the stroke end 23 retain the consensus element 17 in a first position. By pressing against the operating portion 17A, the coil spring is compressed and the consensus element 17 is rotated about the first rotation axis C, until said consensus element 17 is brought into a second position, in which the operating portion 17A abuts against an abutment 26 obtained inside the gripping handle 9 and near the housing 22. When the consensus element 17 is in the first position, the respective operating portion 17A protrudes from the gripping handle 9 more than when the consensus element 17 is in the second position.

The control element 18 comprises an operating portion 18A and an operating portion 18B defined by two distinct and coupled elements. The operating portion 18B of the control element 18 is a lever hinged to the gripping handle 9 around a respective fulcrum, so as to be able to oscillate about a second rotation axis C parallel to and spaced from the first rotation axis C.

The operating portion 18B of the control element 18 is instead housed in the gripping handle 9 so as to be able to translate, guided by a guide obtained in the gripping handle 9, along a direction parallel to the translation direction D of the potentiometer rod.

The operating portion 18B of the control element 18 has an abutment end 27 facing the potentiometer rod and a part opposite the abutment end 27 which comprises a pair of slots 28. The operating portion 18A is located partly between the two slots 28 and comprises pegs 29 which are housed in the slots 28.

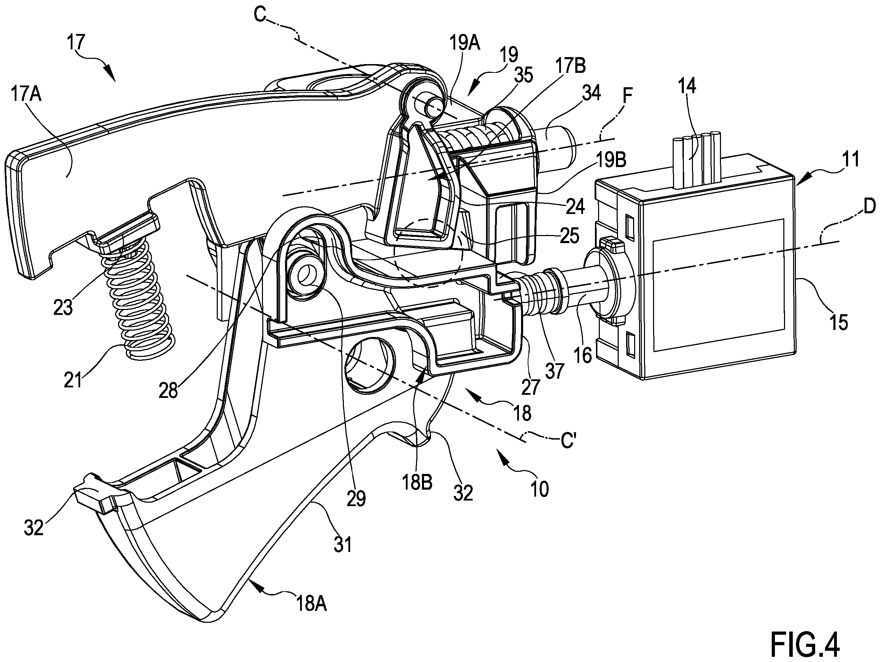

The abutment end 27 rests against the terminal end of the potentiometer rod. In the absence of external stresses, the potentiometer rod pushes the operating portion 18B away from the potentiometer into a rest position of the control element 18. In this position, the coupling of the pegs 29 with the slots 28 keeps the operating portion 18A rotated about the second rotation axis C' and protruding from a respective opening obtained in a second wall 30 of the gripping handle 9 opposite the first wall 20 (figures 4, 5A - 5C, 6A - 6C). The operating portion 18A has stops 32 which prevent said operating portion 18A from exiting from the respective opening.

An edge 31 of the operating portion 18A is shaped so as to receive the fingers of the operator grasping the gripping handle 9. The operating portion 18A of the control element is also hollow so as to lighten it.

The stop element 19 is a lever hinged to the gripping handle 9 around a fulcrum, so as to be able to oscillate about a third rotation axis F. The third rotation axis F is parallel to the translation direction D and spaced from the potentiometer rod. The fulcrum and the third rotation axis F are located at a third wall 33 of the gripping handle 9 placed between the first wall 20 and the second wall 30.

The stop element 19 comprises an operating portion 19A and an operating portion 19B integral with each other, i.e., which can rotate together about the third rotation axis F. The stop element 19 is a monolithic piece, for example made of plastic or metal.

As visible in figure 3, the stop element 19 has a cylindrical cavity located between said operating portion 19A and said operating portion 19B of the stop element 19. The cylindrical cavity houses a pin 34 fixed to the gripping handle 9. A spring 35 is placed around the pin 34, in particular a torsional spring, constrained to said stop element 19 and to a wall of the gripping handle 9. The pin 34 defines the rotation fulcrum of said stop element 19 about the third rotation axis F.

The operating portion 19A of the stop element 19 protrudes cantilevered from an opening obtained in the third wall 33 of the gripping handle 9. The pin 34, the torsional spring 35 and the cylindrical cavity lie inside the gripping handle 9.

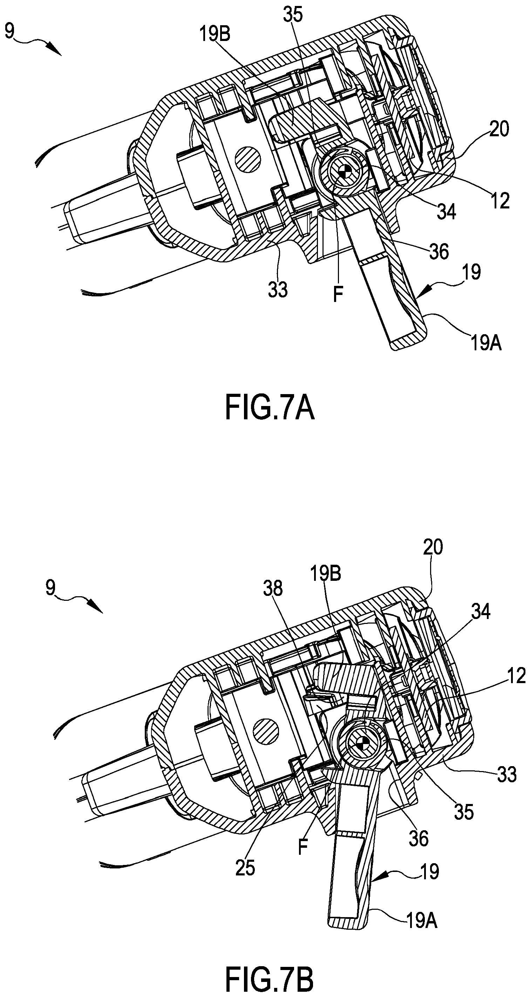

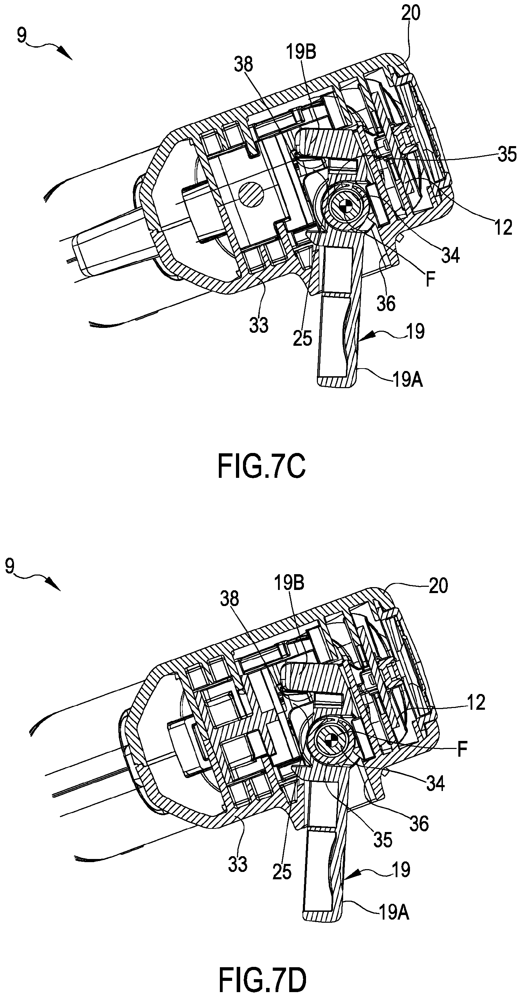

The operating portion 19B of the stop element 19 placed inside the gripping handle 9 has a main extension along a transverse direction with respect to a main extension of the respective operating portion 19B. In a section along a plane perpendicular to the third rotation axis F (figures 7A - 7D), the stop element 19 has an L-shape.

In the absence of external stresses, the torsional spring 35 pushes the operating portion 19A of the stop element 19 against an abutment surface 36 of the opening obtained in the third wall 33 (figure 7A) and such an operating portion 19A is substantially perpendicular to said third wall 33. The stop element 19 is in a locked position, as detailed below, and the torsional spring 35 retains the stop element 19 in the locked position.

Therefore, in the absence of external stresses, the elastic element 21, the torsional spring 35, the elastically yieldable body of the potentiometer, the stroke end 23, the stops 32 and the abutment surface 36 maintain the consensus element 17 in the first position, the control element 18 in the rest position and the stop element 19 in the locked position (figures 4, 5A, 6A, 7A).

In such a configuration (figures 4, 5A, 6A, 7A), the abutment end 27 is placed against the operating portion 19B of the stop element 19. In particular, one end of the operating portion 19B of the stop element 19 is placed in a step recess 37 obtained on the abutment end 27. Furthermore, the projection 25 of the operating portion 17B of the consensus element 17 rests against the operating portion 19B of the stop element 19. It follows that the consensus element 17 is locked in the first position and the control element 18 is locked in the rest position. Even pressing against the operating portion 17A of the consensus element 17 and against the operating portion 18A of the control element 18, such elements do not move because they are locked by the stop element 19 in the locked position. The locked position of the stop element 19 therefore corresponds to a configuration of prohibiting the device 1 from using the tool 4.

in order to activate the actuator 1, the operator grasps the gripping handle 9, turns on the device 1 by means of the on-off switch 13 and enables the device 1, by acting on the operating portion 19A of the stop element 19. Given their ergonomic position, the operator can act on both the on-off switch 13 and on the operating portion 19A of the stop element 19 with his/her thumb.

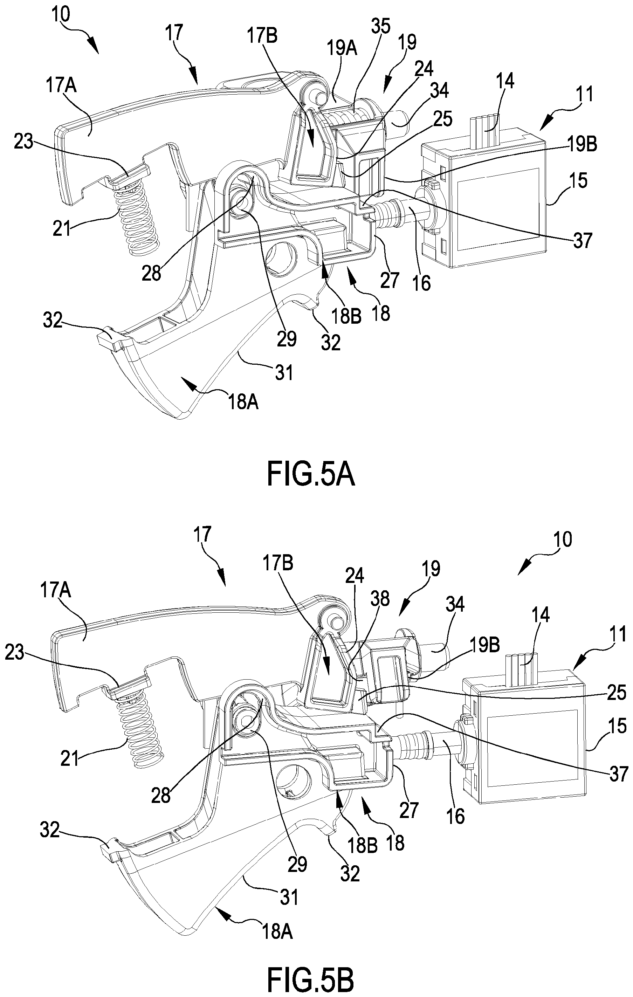

The operator pushes the operating portion 19A of the stop element 19 with his/her thumb and rotates it about the third rotation axis F, overcoming the elastic force of the torsional spring 35 and bringing the stop element 19 into a release position (figures 5B, 6B, 7B). In the locked position and in the release position, the operating portion 19A of the stop element 19 is therefore inclined at different angles to each other with respect to the gripping handle 9 (figures 7A - 7D).

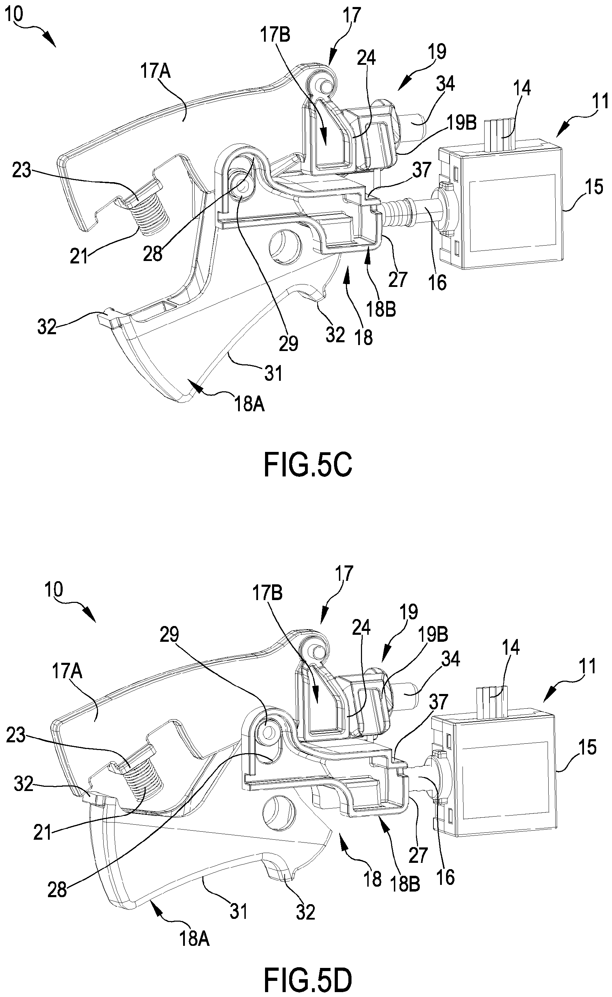

The abutment end 27 of the control element 18 is no longer placed against the operating portion 19B of the stop element 19 and also the projection 25 of the consensus element 17 no longer rests against the operating portion 19B of the stop element 19. The pressure of the palm of the operator's hand on the operating portion 17B of the consensus element 17 rotates said consensus element 17 about the first rotation axis C, moving it from the first position to the second position and compressing the coil spring (figures 5C, 6C, 7C).

The projection 25 is inserted into a seat 38 of the stop element 19 delimited between the operating portion 19A and the operating portion 19B (figures 5B, 6C, 6D, 7B, 7C, 7D) and retains the stop element 19 in the release position. As long as the consensus element 17 is held in the second position by the pressure of the hand on the operating portion 17A of said consensus element 17, the stop element 19 remains in the release position even if the operating portion 19B of said stop element 19 is released by the operator.

At this point, the control element 18 can also be moved by exerting a pressure with the fingers of the hand on the respective operating portion 18A which determines the rotation of said operating portion 18A of the control element 18 about the second rotation axis C'. Such rotation causes a rototranslation of the pegs 29 in the slot 28 and the translation of the operating portion 18B of the control element 18 along the guide and towards the potentiometer (figures 5D, 6D, 7D). The control element 18 is moved from the rest position to one or more actuation positions. When the control element 18 is in the rest position, the respective operating portion 18A protrudes from the gripping handle 9 more than when the control element 18 is in said at least one actuation position.

The abutment end 27 pushes against the potentiometer rod and partially makes it re-enter the box-like body 15, counteracting the action of the elastically yieldable body of the potentiometer. Moving the rod generates or adjusts a control signal of the tool 4, said control signal directly or indirectly piloting the tool. For example, the potentiometer sends a signal to the electronic control board and the electronic control board processes the signal and generates a control signal for the power supply unit and/or the electric motor. In the actuation position, the operating portion 18B of the control element 18 is therefore operatively coupled to the electric motor so as to control it.

The control signal is for example proportional to the movement of the potentiometer rod, i.e., to the rotation of the operating portion 18A of the control element 18, and determines a greater or lesser speed of the rotor carrying the blades. In embodiment variants, the sensor element 11 can be an on/off switch. The control signal can be binary, continuous or discrete. The control signal can define a position of the tool.

The release position of the stop element 19 thus corresponds to a configuration for enabling the device 1 to use said tool 4, in which the consensus element 17 and the control element 18 can be moved by acting on the respective operating portions so as to control the actuator 5.

When the operator intends to stop the electric motor, or bring it to a low number of revolutions, he/she loosens the grip on the gripping handle 9 and releases the operating portion 17A of the consensus element 17 and possibly, if he/she is still holding it with his/her thumb, the operating portion 19A of the stop element 19 so that the operating portion 17B of the consensus element 17, pushed by the coil spring, returns to the first position and the operating portion 19B of the stop element 19, pushed by the torsional spring 35, moves towards the locked position.

The operator also releases the operating portion 18A of the control element 18, so that the operating portion 18B of said control element 18 returns to the rest position and the operating portion 19B of the stop element 19 returns to the locked position. The device 1 therefore returns to the configuration of prohibiting the use of the tool 5.

In an embodiment variant of the drive mechanism, not illustrated, the operating portion 17B of the consensus element 17 further comprises, with respect to what is described above, an abutment portion engageable with the operating portion 18B of the control element 18 such that, when the consensus element 17 is in the first position, said abutment portion locks the control element 18 in the rest position even if the stop element 19 has already been moved to the release position (figures 5B, 6B, 7B).

For example, observing figure 4, the aforementioned abutment portion is a hook placed on the peripheral portion 24 of the operating portion 17B of the consensus element 17 which engages in a recess obtained on a surface of the operating portion 18B of the control element 18, said surface facing the operating portion 17B of the consensus element 17 and towards the hook. The abutment portion and the recess can be placed inside the dashed circle illustrated in figure 4.

Therefore, in this variant, when the consensus element 17 is in the first position, the operating portion 17B of the consensus element 17 engages the operating portion 18B of the control element 18 and prevents the movement thereof, when the consensus element 17 is in the second position, the operating portion 17B of the consensus element 17 maintains the stop element 19 in the respective release position.

During activation, the pressure of the operator's palm on the operating portion 17B of the consensus element 17 and the rotation of the consensus element 17 also cause the release of the operating portion 18B of the control element 18 by the consensus element 17.

The invention allows to attain the intended objects.

In particular, the drive mechanism allows to avoid involuntary drives and thus to make the device safe.

The drive mechanism is ergonomic and therefore makes the operator's work easy and relatively comfortable.

The drive mechanism is also compact and can be installed in relatively compact and easily graspable gripping handles.

The drive mechanism is also robust and therefore reliable and makes the device as a whole also reliable.

### Elements list

- 1: device
- 2: main body
- 3: work head
- 4: tool
- 5: actuator
- 6: housing
- 7: transverse bar
- 8: left gripping handle
- 9: right gripping handle
- 10: drive mechanism
- 11: sensor element
- 12: electronic or electromechanical control unit
- 13: on-off switch
- 14: contacts
- 15: box-like body
- 16: sensitive element
- 17: consensus element
- 17A: operating portion
- 17B: operating portion
- 18: control element
- 18A: operating portion
- 18B: operating portion
- 19: stop element
- 19A: operating portion
- 19B: operating portion
- 20: first wall
- 21: elastic element
- 22: housing
- 23: stop
- 24: peripheral portion
- 25: projection
- 26: abutment
- 27: abutment end
- 28: slots
- 29: pegs
- 30: second wall
- 31: shaped edge
- 32: stops
- 33: third wall
- 34: pin
- 35: torsional spring
- 36: abutment surface
- 37: step recess
- 38: seat
- C: first rotation axis
- C': second rotation axis
- F: third rotation axis
- D: translation direction

## Claims

1. Device for performing maintenance operations on a terrain or a garden, said device comprising:
a main body (2) provided with a work head (3) and a gripping handle (9) configured to be grasped by an operator's hand;
a tool (4) mounted on or in the main body (2);
an actuator (5) mounted on or in the main body (2) and connected to the tool (4);
the gripping handle (9) comprising a drive mechanism (10) operatively coupled to the actuator (5) for controlling said actuator (5) and moving the tool (4);
wherein the drive mechanism (10) comprises a consensus element (17), a control element (18) and a stop element (19), each of said consensus element (17), control element (18) and stop element (19) comprising an operating portion (17A, 18A, 19A) extending at least partially outside the gripping handle (9), to interact with the operator's hand, and a respective operating portion (17B, 18B, 19B);
the stop element (19) being configured to assume:
▪ a locked position, in which the operating portion (19B) of said stop element (19) engages the operating portion (17B) of the consensus element (17) and/or the operating portion (18B) of the control element (18) so as to prevent movements of at least the control element (18);
▪ a release position, in which a mobility of the consensus element (17) and of the control element (18) is allowed by acting on the respective operating portions (17A, 18A) so as to control the actuator (5);
wherein a switching between the locked position and the release position is obtained by acting on the operating portion (19A) of the stop element (19);
wherein the consensus element (17) is movable between a first position and a second position:
▪ in the first position, the operating portion (17B) of the consensus element (17) engaging the operating portion (18B) of the control element (18) and preventing the movement thereof; and/or
▪ in the second position, the operating portion (17B) of the consensus element (17) maintaining the stop element (19) in the respective release position.

2. Device according to claim 1, wherein the stop element (19) placed in the locked position prevents movements of the consensus element (17) placed in the respective first position; wherein, when the stop element (19) is in the release position, the consensus element (17) can be moved between the first position and the second position by acting on the operating portion (17A) of said consensus element (17).

3. Device according to claim 1 or 2, wherein the drive mechanism (10) comprises an elastic element (21) coupled to the consensus element (17) and configured to move the consensus element (17) towards the first position or to retain the consensus element (17) in the first position; wherein a force of the elastic element (21) counteracts an action exerted on the operating portion (17B) of the consensus element (17) and adapted to move or retain the consensus element (17) in the second position.

4. Device according to one of claims 1 to 3, wherein the operating portion (19B) of the stop element (19) has a seat (38) and the operating portion (17B) of the consensus element (17) has a projection (25), wherein, in the second position, the projection (25) of the operating portion (17B) of the consensus element (17) is housed in the seat (38) of the operating portion (19B) of the stop element (19).

5. Device according to one of claims 1 to 4, wherein the operating portion (19A) of the stop element (19) protrudes cantilevered from the gripping handle (9), wherein in the locked position and in the release position, the operating portion (19A) of the stop element (19) is inclined at different angles from each other with respect to the gripping handle (9).

6. Device according to one of claims 1 to 5, wherein the drive mechanism (10) comprises a spring (35) coupled to the stop element (19) and configured to move the stop element (19) towards the locked position or to retain the stop element (19) in the locked position; wherein a force of the spring (35) counteracts an action exerted on the operating portion (19B) of the stop element (19) and adapted to move or retain the stop element (19) in the release position.

7. Device according to one of claims 1 to 6, wherein the control element (18) is movable between a rest position and at least one actuation position; wherein, when the stop element (19) is in the locked position, the operating portion (19B) of said stop element (19) maintains the control element (18) in the rest position; wherein, when the stop element (19) is in the release position and, optionally, the consensus element (17) is in the second position, the control element (18) can be moved in said at least one actuation position by acting on the operating portion (18A) of said control element (18); wherein, in said at least one actuation position, the operating portion (18B) of the control element (18) is operatively coupled to the actuator (5) so as to control it; optionally wherein the operating portion (17B) of the consensus element (17), optionally an abutment portion of the operating portion (17B) of the consensus element (17), is engageable with the operating portion (18A) of the control element (18), when the consensus element (17) is in the first position, for locking the control element (18) in the rest position.

8. Device according to claim 7, comprising a sensor element (11) electrically connected to the actuator (5); wherein the sensor element (11) is housed in the gripping handle (9) and has a sensitive element (16) engaged or engageable with the operating portion (18B) of the control element (18); wherein the sensitive element (16) is coupled to an elastically yielding body configured to move the control element (18) towards the rest position or to retain the control element (18) in the rest position; wherein a force of the elastically yielding body counteracts an action exerted on the operating portion (18B) of the control element (18) and adapted to move or retain the control element (18) in said at least one actuation position.

9. Device according to one of claims 1 to 8, wherein the consensus element (17) is movable in rotation about a first rotation axis (C), wherein the control element (18) is movable in rotation about a second rotation axis (C') parallel to the first rotation axis (C), wherein the stop element (19) is movable in rotation about a third rotation axis (F) perpendicular to the first rotation axis (C) and to the second rotation axis (C').

10. Device according to claim 9, wherein the operating portion (18A) of the control element (18) is rotatably movable about the second rotation axis (C'), wherein the operating portion (18B) of the control element (18) is connected to the operating portion (18A) of said control element (18) so as to translate along a direction (D) parallel to the third rotation axis (F) when the operating portion (18A) of the control element (18) rotates about the second rotation axis (C'); optionally wherein the operating portion (18B) of the control element (18) has at least one slot (28) housing a peg (29) integral with the operating portion (18A) of the control element (18) and wherein the operating portion (18B) of the control element (18) is translatable in a guide obtained in the gripping handle (9), whereby the rotation of the operating portion (18A) of the control element (18) around the second rotation axis (C') determines a rototranslation of the peg (29) in the slot (28) and the translation of the operating portion (18A) of the control element (18) along the guide.

11. Device according to one of claims 1 to 10, wherein the operating portion (17A) of the consensus element (17) is located on a first wall (20) of the gripping handle (9), the operating portion (18A) of the control element (18) is located on a second wall (30) of the gripping handle (9) opposite the first wall (20), the operating portion (19A) of the stop element (19) is located on a third wall (33) of the gripping handle (9) placed between the first wall (20) and the second wall (30), so that, by grasping the gripping handle (9) with the hand, the palm rests against the operating portion (17A) of the consensus element (17), the thumb can be positioned against the operating portion (19A) of the stop element (19) and the remaining fingers rest against the operating portion (18A) of the control element (18).

12. Device according to one of claims 1 to 11, wherein the tool (4) mounted on or in the main body (2) is a fan of a blower or an aspirator, a valve of a hydro-cleaner or is a blade, a wire, a knife, a rake, a hoe, a scissor.

13. Method for driving a device according to one or more of claims 1 to 12, comprising:
enabling the device (1) by acting on the operating portion (19A) of the stop element (19) so as to move the operating portion (19B) of said stop element (19) from the locked position to the release position;
acting on the operating portion (17A) of the consensus element (17) so as to move the consensus element (17) from the first position into the second position and stop the stop element (19) in the respective release position;
controlling the tool (4) by acting on the operating portion (18A) of the control element (19A).

14. Method according to claim 13, wherein, by acting on the operating portion (17A) of the consensus element (17), the release of the operating portion (18B) of the control element (18) by the consensus element (17) is further determined; and/or wherein, by maintaining the consensus device (17) in the second position by means of a continuous action exerted on the respective operating portion (17A), the stop element (19) remains in the release position also by releasing the operating portion (19A) of said stop element (19).

15. Method according to claim 13 or claim 14, comprising:
releasing the operating portion (17A) of the consensus element (17) and the operating portion (19A) of the stop element (19) so that the operating portion (17B) of the consensus element (17) returns to the first position and the operating portion (19B) of the stop element (19) moves toward the locked position;
releasing the operating portion (18A) of the control element (18) so that the operating portion (18B) of said control element (18) returns to the rest position and the operating portion (9B) of the stop element (19) returns to the locked position.
